## Europäisches Patentamt

## European Patent Office

## Office européen des brevets

(19)

(11) **EP 1 114 099 B1**

(12) **FASCICULE DE BREVET EUROPEEN**

(45) Date de publication et mention
de la délivrance du brevet:
**19.10.2005 Bulletin 2005/42**

(21) Numéro de dépôt: **00929647.6**

(22) Date de dépôt: **19.05.2000**

(51) Int Cl.[7]: **C08L 27/16**, C08L 33/06,
C09D 127/16, C09D 133/06
// (C08L27/16, 27:18),
C08L33:06,(C09D127/16,
127:18), C09D133:06

(86) Numéro de dépôt international:
**PCT/FR2000/001381**

(87) Numéro de publication internationale:
**WO 2000/073383 (07.12.2000 Gazette 2000/49)**

(54) **COMPOSITION POLYMERIQUE COMPRENANT UN POLYMERE FLUORE SEMI-CRISTALLIN, UN POLYMERE ACRYLIQUE ET UN AGENT NUCLEANT, FORMULATIONS ET REVETEMENTS OBTENUS A PARTIR DE CES COMPOSITIONS**

POLYMERZUSAMMENSETZUNG ENTHALTEND EIN HALB-KRYSTALLINES FLUORPOLYMER, EIN ACRYLPOLYMER UND EIN NUKLEIERUNGSMITTEL, SOWIE DARAUS HERGESTELLTE BESCHICHTUNGEN

POLYMER COMPOSITION COMPRISING A FLUORIZED SEMI-CRYSTALLINE POLYMER, AN ACRYLIC POLYMER AND A NUCLEATING AGENT, FORMULATIONS AND COATINGS OBTAINED FROM SAID COMPOSITIONS

(84) Etats contractants désignés:
**AT BE CH CY DE DK ES FI FR GB GR IE IT LI LU MC NL PT SE**

(30) Priorité: **31.05.1999 FR 9906842**

(43) Date de publication de la demande:
**11.07.2001 Bulletin 2001/28**

(73) Titulaire: **Arkema**
**92800 Puteaux (FR)**

(72) Inventeurs:
• **DRUJON, Xavier**
  **F-64290 Bosdarros (FR)**
• **GABOURY, Scott**
  **Blue Bell, PA 19422 (US)**
• **SCHNEIDER, Sophie**
  **F-67000 Strasbourg (FR)**
• **WITTMANN, Jean-Claude**
  **F-67370 Pfulgriesheim (FR)**

(74) Mandataire: **Neel, Henry et al**
**ARKEMA**
**Département Propriété Industrielle**
**4-8, cours Michelet,**
**La Défense**
**92091 Paris La Défense Cedex (FR)**

(56) Documents cités:
**US-A- 3 579 370          US-A- 3 701 749**

• **HERRERO C R ET AL: "COMPATIBILIZATION OF SEMICRYSTALLINE POLYMERIC ALLOYS THROUGH SEPIOLITE ADDITION" JOURNAL OF APPLIED POLYMER SCIENCE,US,JOHN WILEY AND SONS INC. NEW YORK, vol. 51, no. 7, pages 1189-1197-1197, XP000465174 ISSN: 0021-8995 cité dans la demande**
• **DATABASE CHEMABS [en ligne] CHEMICAL ABSTRACTS SERVICE, COLUMBUS, OHIO, US; retrieved from STN Database accession no. 127:222032 CA XP002128253 & JP 09 221621 A (NIPPON KOKAN CO., LTD., JAPAN) 26 août 1997 (1997-08-26)**

- DATABASE WPI Section Ch, Week 199813 Derwent Publications Ltd., London, GB; Class A14, AN 1998-141198 XP002128254 & JP 10 017815 A (NKK CORP), 20 janvier 1998 (1998-01-20)

- DATABASE WPI Section Ch, Week 197419 Derwent Publications Ltd., London, GB; Class A14, AN 1974-35221V XP002128255 & JP 48 034956 A (KUREHA CHEM IND CO LTD), 23 mai 1973 (1973-05-23) cité dans la demande

## Description

La présente invention concerne des compositions à base d'un polymère fluoré semi-cristallin et d'un polymère acrylique, les formulations correspondantes ainsi que les revêtements obtenus à partir de ces formulations.

Parmi les polymères fluorées, les homopolymères de difluorure de vinyle (VF2) et copolymères de VF2 avec d'autres monomères fluorés insaturés sont appréciés pour leur transformabilité, leurs propriétés mécaniques et leur résistance exceptionnelle aux agressions chimiques et climatiques.

Ces polymères ou copolymères de VF2 peuvent être mis en oeuvre par les techniques de transformations classiques, telles que l'extrusion ou l'injection moulage. La stabilité des pièces ainsi obtenues envers les hautes températures, les liquides corrosifs, les agents oxydants, les rayonnements UV est souvent comparable à celle des matériaux totalement fluorés. En conséquence, les (co)polymères de VF2 ont trouvé de nombreuses applications dans les domaines tels que l'ingénierie mécanique, l'ingénierie électrique et électronique, et l'ingénierie chimique.

On sait par ailleurs que le Poly(difluorure de vinyle) (PVDF), qui est un polymère semi-cristallin, a la particularité d'être compatible avec d'autres polymères, notamment des polymères acryliques.

Par ailleurs, il est connu que dans les mélanges avec un polymère amorphe, le PVDF ne peut cristalliser que si sa concentration est supérieure à 40 % en poids. Si la concentration du PVDF reste inférieure à 40 % le mélange est amorphe. La compatibilité est donc limitée par la cristallisation du PVDF, qui entraîne une séparation de phase partielle.

La compatibilité d'un mélange PVDF et d'un polymère X est démontrée par l'existence d'une seule température de transition vitreuse (Tg) du mélange, et par une dépression du point de fusion mesurés par Analyse Thermique Différentielle (ATD). D'autres techniques, telles que la RMN du solide ou l'Analyse Mécanique Dynamique (AMD), ont confirmé ces résultats. Cette compatibilité est rationalisée par la présence d'interactions spécifiques entre les atomes d'hydrogène du PVDF et les groupements carbonyles du Poly(méthacrylate de méthyle) (PMMA). Le tableau I ci-après répertorie d'une façon non exhaustive les polymères compatibles avec le PVDF.

Tableau I

| Polymère | Analyse thermique différentielle | Compatibilité avec le PVDF |
|---|---|---|
| Poly (méthyl méthacrylate) | 1 Tg | oui |
| Poly (éthyl méthacrylate) | 1 Tg | oui |
| Poly (méthyl acrylate) | 1 Tg | oui |
| Poly (éthyl acrylate) | 1 Tg | oui |
| Poly (vinyl acétate) | 1 Tg | oui |
| Poly (vinyl méthylcétone) | 1 Tg | oui |

Ce qui précède reste applicable qualitativement aux copolymères de $VF_2$ contenant jusqu'à environ 30% en poids d'autres composés fluorés éthyléniques, tels que le fluorure de vinyle (VF), l'hexafluoropropylène (HFP), le tetrafluoroéthylène (TFE), et le trifluoroéthylène (TrFE), ainsi qu'aux copolymères acryliques contenant une majorité d'unités monomères telles que celles rapportées dans le tableau 1.

La composition du mélange et son histoire thermique ont une influence prépondérante sur le degré de compatibilité et la morphologie du matériau. Lors d'un refroidissement à partir de l'état fondu d'un tel mélange, on peut distinguer trois domaines :

- pour des taux de PMMA élevés (supérieur à 60% en poids par rapport au poids.total de la composition) le PVDF ne cristallise pas et on observe une température de transition vitreuse unique.
- pour des taux de PMMA faibles (inférieurs à 25% en poids) le taux de cristallinité est constant et proche du taux de cristallinité du PVDF seul, soit environ 45%, le reste étant amorphe.
- Dans une zone intermédiaire, entre 25 et 60% en poids de PMMA, le taux de cristallinité est faible. Cependant, le PVDF dans la phase amorphe a tendance à cristalliser graduellement, d'autant plus rapidement que la température est élevée.

Or, c'est ce domaine intermédiaire de composition, entre 25% et 60% de PMMA, qui est le plus intéressant du point de vue applicatif : la présence d'un phase cristalline (PMMA inférieur à 60%) est nécessaire pour obtenir de bonnes propriétés mécaniques et une bonne tenue à la chaleur. Par contre, un taux de PMMA inférieur à 25% conduit à de mauvaises propriétés optiques initiales, et fragilise le matériau.

Ainsi, on peut fabriquer par extrusion ou injection moulage de mélanges PVDF/PMMA des pièces (par exemple : tubes, films, fibres) ayant des propriétés mécaniques et optiques initiales excellentes. Cependant, la cristallisation graduelle du PVDF conduit plus au moins rapidement à une dégradation de la transparence et des propriétés mécaniques.

D'autre part, les mélanges de PVDF et de polymère acryliques sont utilisés pour obtenir des revêtements architecturaux, pour protéger des intempéries des substrats tels que l'acier, l'aluminium ou des matières plastiques. Ces revêtements, à base de PVDF et d'un polymère acrylique, sont connus de l'ouvrage : "Modern Fluoropolymers, Edited by John Scheirs, 1997 John Wiley & Sons Ltd, chapter 14, pp 271 - 299 Fluoropolymer Coatings for Architectural Application". Ces mélanges peuvent être formulés avant application en solution ou en dispersion dans un solvant ou encore dans l'eau et enfin sous forme d'une poudre. Ces mélanges peuvent être aussi directement extrudés sur les substrats à protéger Les principaux composants d'une formulation telle que ci-dessus sont les suivants :

- PVDF
- résine acrylique
- pigments
- éventuellement eau et/ou solvants organiques
- autres additifs.

Après application de cette formulation sur le substrat, l'ensemble est porté à haute température jusqu'à fusion et/ou solubilisation du PVDF, puis refroidit. Ces revêtements se montrent supérieurs à ceux obtenus en utilisant des résines telles que les siloxanes, les acrylates, les polyuréthanes ou les polyesters en terme de protection contre les agressions chimiques ou climatiques. Cependant, ils présentent un certain nombre de désavantages:

**-** en terme de propriétés optiques, une brillance trop faible.
**-** une augmentation graduelle du taux de cristallinité au cours du temps. Suite à la contraction de volume qui en découle, le revêtement est soumis à des contraintes internes importantes, et sa flexibilité diminue. Ceci peut entraîner la formation de fissures lors de la mise en forme du substrat.

Il est donc souhaitable de trouver un moyen permettant de stabiliser le taux de cristallinité des mélanges de PVDF et de PMMA tout en conservant le meilleur compromis en terme de propriétés optiques et mécaniques.

Dans la revue "Kunststoffberater 11/95, pp 34 - 38, Modification de la structure et des propriétés de plastiques semi-cristallin", par J. Bongardt et T. Sanders, les auteurs abordent le problème de la cristallisation du PVDF en sphérolites sous l'effet d'agents nucléants, notamment de la poudre de poly(tetrafluoroéthylène), (PTFE) à des concentrations de 0,05 à 1 % en poids. Il s'avère que le diamètre sphérolitique diminue de manière asymptotique lorsque la quantité d'agents nucléant augmente. Dans le cas d'une poudre fine de PTFE (3 µm) au lieu d'une poudre de PTFE (40 µm), on constate un effet plus fort en raison du plus grand nombre de germes. Le résultat technologique de la nucléation est une diminution de la durée de la cristallisation et donc de la durée de solidification dans le moule. Les conditions de cristallisation modifiées par la nucléation avec de la poudre de PTFE entraînent l'augmentation de la cristallinité et celle du module d'élasticité. L'utilisation de différents agents de nucléation à grain fin, en PTFE ou en poly(tétrafluoroéthylène-co-perfluorovinyléthers) (PFA, commercialisé par la société Dupont) ou en poly(éthylène-co-tétrafluoroéthylène) (ETFE) ou encore en PVDF irradié, n'a pas apporté des différences significatives; dans tous les cas le diamètre des sphérolites obtenus a été réduit d'un facteur trois à quatre, et est d'environ 40 µm pour 1 % de PTFE.

La demande de brevet japonais JP 09221621 décrit une composition comprenant du PVDF, un polymère acrylique, du carbure de silicium, des billes de verre et une poudre de PTFE (taille des particules entre 1 et 5 µm).

La demande de brevet japonais JP-48-34956 enseigne le procédé de préparation d'un composé à base de PVDF, consistant à mélanger aux particules ou au latex de PVDF, de 0,05 % à 30 % de latex de résine fluorée dont la température de fusion est supérieure à celle du PVDF. Une telle résine fluorée peut être le poly(fluorure de vinyle), le polytétrafluorure d'éthylène (PTFE), le polytrifluorure de chlorure d'éthylène, ou encore des résines choisies parmi les homopolymères et les copolymères de fluorure de vinyle (VF), de trifluorure de chlorure d'éthylène (CTFE), de difluorure de vinylidène ($VF_2$) et de difluorure de dichlorure d'éthylène ($VF_2Cl_2$), résines dont le point de fusion est plus élevé que celui du PVDF. On ajoute normalement de 0, 05 à 30 % en poids par rapport au PVDF de latex de ces résines fluorées dont les particules ont de 0,05 à 1 µm de diamètre. Dans l'exemple 8, du PVDF mélangé à des particules de PTFE de 0,05 µm donne après fusion du PVDF à 250°C une plaque de 1 mm d'épaisseur comportant des sphérolites d'une taille inférieure à 1 µm.

Il y a de nombreuses publications et brevets qui décrivent l'utilisation de PVDF et de ses copolymères pour la formation de revêtements. A titre d'exemple, on peut citer les brevets US 3324069, 4128519, 5177150, le brevet mondial WO 93/13178 et le brevet européen EP 0670353 A2.

Le modifiant acrylique est sélectionné en fonction des propriétés requises pour le revêtement. On peut utiliser des mélanges de plusieurs modifiants. On utilise le plus souvent un thermoplastique acrylique à base de méthylméthacrylate, mais des thermodurcissables acryliques peuvent être aussi utilisés.

Le but principal de ce composé acrylique est de

a) améliorer la dispersion du pigment
b) augmenter l'adhésion au substrat recouvert par le revêtement.

Les modifiants acryliques sont des copolymères d'un ou plusieurs esters d'alkyle de l'acide acrylique ou de l'acide méthacrylique, optionnellement avec d'autres monomères insaturés polymérisables. Pour obtenir un revêtement ayant de bonnes propriétés initiales et une bonne tenue au vieillissement, il est préférable que le modifiant acrylique soit au moins partiellement compatible avec le PVDF. C'est pourquoi dans le cadre de l'invention on préfère particulièrement les copolymères d'un ou plusieurs esters de méthyle ou d'éthyle de l'acide acrylique ou de l'acide méthacrylique, optionnellement avec d'autres monomères insaturés polymérisables. On préfère tout particulièrement un copolymère de méthacrylate de méthyle et d'acrylate d'éthyle, de masse moléculaire comprise entre 50000 et 150000. Les autres monomères insaturés polymérisables sont choisit parmi :

- Les autres esters d'alkyle de l'acide acrylique ou de l'acide méthacrylique, tels que l'acrylate de butyle, l'acrylate de 2-ethylhexyle, le méthacrylate d'éthyle.
- Les styréniques tels que le styrène, l'alpha méthyl styrène
- Les nitriles, tels l'acrylonitrile et le méthacrylonitrile
- Les vinyliques, tel l'acétate de vinyle ou le chlorure de vinyle.

Des monomères fonctionnels tels que l'acide acrylique ou méthacrylique, l'hydroxyéthylacrylate ou méthacrylate, l'hydroxypropyl acrylate ou méthacrylate peuvent aussi être incorporés dans le modifiant acrylique. Dans ce cas, il est possible d'utiliser un agent de réticulation, tels que des isocyanates ou des isocyanates bloqués. Il est aussi possible d'utiliser comme comonomères des monomères portant des fonctions autoréticulantes, par exemple, le N-(alcoxyméthyl)acrylamide et le N-(alcoxyméthyl)méthacrylamide.

Les pigments sont ajoutés pour trois raisons principales :

(1) pour des raisons esthétiques
(2) pour la stabilité des couleurs
(3) pour obtenir l'opacité aux rayons ultraviolets.

Le plus souvent les pigments sont choisis parmi :

- les oxydes de métal et oxydes métalliques mixtes, calcinés
- le dioxyde de titane rutile
- le mica

Il est bien sur précisé que les quantités respectives de chacun des ingrédients rentrant dans la composition du revêtement ainsi que le choix de la nature exacte de chaque type de ces ingrédients dépendra des propriétés requises pour le revêtement, en fonction de l'application visée. De plus, des additifs habituellement utilisés pour la formulation de polymères filmifiants peuvent aussi être présents. Ces additifs peuvent être des plastifiants, des surfactants, des antioxydants, des agents anti UV, des stabilisants, des agents de contrôle de la rhéologie, des agents coalescents, des agents réticulants, des catalyseurs, et leur semblables. Il est généralement préféré que :

1. Au moins 70 % en poids de la résine totale doit être du PVDF, et
2. Au moins 40 % en poids de la totalité des solides doit être du PVDF.

Plusieurs procédés peuvent être utilisés pour appliquer les compositions :

- soit à l'aide de solvants organiques (Il y a de nombreuses publications qui décrivent l'utilisation de PVDF et de ses copolymères pour la formation de revêtements). A titre d'exemple, on peut citer US 3324069, 4128519, 5177150, WO 93/13178 et EP 0670353 A2.
- soit à l'aide d'une dispersion (décrite par exemple dans le brevet US4309328)
- soit sous forme de (décrite par exemple dans le brevet US5030394, méthode qui consiste à extruder à l'état fondu le PVF, le modifiant acrylique et les additifs (pigments, etc..) cités ci dessus, puis à granuler le jonc obtenu après refroidissement, à broyer cryogéniquement les granulés obtenus. La poudre qui est obtenue est ensuite appliquée sur un substrat et assujettie à un traitement thermique.

Le procédé le plus utilisé pour appliquer les compositions PVDF sous forme d'une formulation consiste à disperser et/ou dissoudre les différents constituants de la composition dans un solvant organique, à les déposer (par enduction sur bobine ou par atomisation par une buse) sur un substrat en général recouvert au préalable par un primaire. Le procédé prévoit une cuisson du substrat à température élevée, généralement allant de 149 à 260°C pour éliminer le solvant et filmifier le PVDF.

("Modern Fluoropolymers, Edited by John Scheirs, 1997 John Wiley & Sons Ltd, chapter 14, pp 271 - 299" Fluoropolymer Coatings for Archtectural Application)

Les fonctions principales des solvants organiques utilisés avec des formulations à base de PVDF sont donc de :

1. Fournir le milieu pour disperser les composants solides (résine PVDF pigments et autres additifs solides).
2. Modifier la viscosité de la formulation pour s'adapter à la méthode d'application de celle-ci.
3. Dissoudre la résine PVDF et favoriser le mélange avec le modifiant acrylique pendant le cycle de cuisson (aide à la coalescence).

Il existe trois grandes classes de solvants associés aux résines PVDF.

1. Les solvants dits actifs qui dissolvent la résine PVDF à la température ambiante :

    a) Les solvants polaires
    b) les amides, les phosphates, les cétones de faible masse molaire.

2. Les solvants dits latents qui ne dissolvent pas la résine PVDF à la température ambiante mais seulement à température élevée :

    a) les cétones de masse molaire élevée
    b) les esters
    c) les éthers de glycol
    d) les esters éther de glycol.

3. Les non-solvants qui ne dissolvent pas la résine PVDF quelle que soit la température : les hydrocarbures, les alcools, les solvants chlorés.

Les solvants latents sont les plus utilisés pour la résine PVDF. Ils permettent d'obtenir des formulations avec une dispersion des solides de 40 à 60 % en poids. Par élévation de température pendant le cycle de cuisson, la résine PVDF sous forme d'une fine suspension se solubilise dans le solvant et coalesce pour produire un film uniforme par évaporation du solvant.

Le solvant latent est le plus souvent choisi parmi le butyrolactame, l'isophorone, la méthyl isoamyl cétone, le cyclohexanone, le diméthylphthalate, le propyléne glycol méthyl éther, le propylène carbonate, le diacétone alcool, le gycérol triacétate.

Les solvants actifs peuvent être utilisés pour produire une solution, mais alors la teneur en matière dite sèche est généralement limitée à environ 20 à 25 % en poids car à des teneurs plus élevées la viscosité est trop élevée.

Les non-solvants sont utilisés comme diluants dans les formulations à base de PVDF.

Une formulation typique à base de PVDF a la composition suivante (en pourcentage en poids) :

- résine PVDF (20 - 25 %)
    70 % au minimum de la partie résinée
       40 % au minimum de la totalité des solides
- résine acrylique (8 - 11 %)
- pigments (12 - 16 %)
- solvants (50 - 60 %).

Le procédé prévoit une cuisson du substrat à température élevée, généralement allant de 149 à 260°C. Lors du refroidissement, il se produit une cristallisation de PVDF sous forme de sphérolites ayant une taille apparente d'environ 30 µm. L'état liquide à partir duquel s'effectue cette recristallisation peut être dans le cadre de l'invention, en fonction des cinétiques d'évaporation et de recristallisation, soit une phase polymèrique fondue pure, soit une phase contenant au moins un des solvants organiques cités ci dessus.

En partant d'une dispersion de l'art antérieur contenant du PVDF, au moins un modifiant du type acrylique, éventuellement des pigments, au moins un solvant organique et éventuellement d'autres additifs, on constate que les propriétés mécaniques et l'aspect du revêtement final dépendent de la composition du mélange, de la nature du PVDF utilisé (composition, masse moléculaire) de la nature du modifiant du type acrylique (degré de miscibilité avec le PVDF, Tg) et également de l'histoire thermomécanique.

Le but de la présente invention est d'obtenir une composition à base d'un polymère fluoré semi-cristallin et d'un modifiant acrylique apte à être mise sous la forme d'une formulation, cette dernière conduisant par recouvrement d'un substrat puis d'une cuisson suivie d'un refroidissement à un substrat recouvert d'un revêtement uniforme et adhérant, ce revêtement devant avoir une structure stable au cours du temps et une brillance améliorée.

Ce but est atteint par une composition polymèrique comportant un mélange de polymères comprenant:

(a) un polymère fluoré semi-cristallin,
(b) un polymère acrylique,

caractérisée en ce qu'elle comprend en outre :

(c) de 0.01 à 20% en poids, par rapport au poids total du polymère fluoré semi-cristallin et du polymère acrylique, d'un agent nucléant sous la forme de particules ayant un point de fusion supérieur à celui du polymère fluoré semi-cristallin, dans laquelle l'agent nucléant est un nanoploymère de tétrafluoroéthylène ou un copolymère de tétrafluoroéthylène avec un composé fluoré éthylénique et en ce que les particules ont une taille de 0,05 µm à 0,5 µm.

En effet, une grande finesse de taille de particules de l'agent nucléant favorise la vitesse de cristallisation lors du refroidissement du polymère fluoré semi-cristallin

L'agent nucléant peut être ajouté soit à la résine (polymère) fluorée semi-cristalline, soit au modifiant polymère acrylique, soit encore au mélange de ces deux polymères. Le polymère fluoré semi-cristallin et le modifiant acrylique peuvent être lors de cet ajout sous forme de poudre ou de dispersion aqueuse ou encore dispersée dans un solvant latent du polymère fluoré semi-cristallin.

L'homopolymère de tétrafluoéthylène ou un copolymère de tétrafluoéthylène avec un composé fluoré éthylénique est de préférence sous la forme d'un latex.

L'agent nucléant est choisi parmi un homopolymère de tetrafluoroéthylène ou un copolymère de tetrafluoroéthylène comprenant de 0.1% à 20% en moles de fluorure de vinylidène, de fluorure de vinyle, d'hexafluopropylène, de trifluoroéthylène, de trifluorochloroéthylène, ou d'hexafluoro-isobutylène, ou encore parmi le poly(éthylène-co-tétrafluoroéthylène) (ETFE), le poly(tétrafluoroéthylène-co-perfluorovinyléthers) (PFA) et le PVDF irradié. Ces trois derniers agents nucléants sont déjà connus comme formant des germes de cristallisation dans le PVDF seul (voir la demande de brevet JP-46 701 45 et l'article Kunstoffberater 11/95, ci-dessus).

Avantageusement, le polymère fluoré semi-cristallin est un homopolymère du difluorure de vinylidène ou un copolymère du difluorure de vinylidène avec un monomère fluoré éthylénique ou un composé éthylénique non fluorée ou un diène non fluoré, monomères copolymérisables avec le difluorure de vinylidène.

Avantageusement, le monomère fluoré éthylénique est choisi parmi le fluorure de vinyle, l'hexafluopropylène, le trifluoroéthylène, le trifluorochloroéthylène, le tétrafluoroéthylène ou l'hexafluoro-isobutylène, le monomère éthylénique non fluorée est choisi dans le groupe constitué par l'éther cyclohexylvinylique et l'éther hydroxyéthylvinylique, et le diène non fluoré est choisi dans le groupe constitué par le butadiène, l'isoprène et le chloroprène.

Avantageusement, le polymère fluoré semi-cristallin est un copolymère de difluorure de vinylidène avec de 0.1% à 20% en moles de fluorure de vinyle ou d'hexafluopropylène ou de trifluoroéthylène ou de trifluorochloroéthylène ou de tétrafluoroéthylène.

De préférence, le polymère fluoré semi-cristallin est un homopolymère de difluorure de vinylidène.

Avantageusement, le polymère acrylique (modifiant acrylique) est choisi parmi des copolymères d'un ou plusieurs esters méthylique ou éthylique de l'acide acrylique ou de l'acide méthacrylique, optionnellement avec d'autres monomères insaturés polymérisables choisis parmi :

- Les autres esters d'alkyle de l'acide acrylique ou de l'acide méthacrylique, tels que l'acrylate de butyle, l'acrylate de 2-ethylhexyle,
- Les styréniques tels que le styrène, l'alpha méthyl styrène,
- Les nitriles, tels l'acrylonitrile et le méthacrylonitrile,
- Les vinyliques, tel l'acétate de vinyle ou le chlorure de vinyle,

avec la condition supplémentaire que l'acrylate de méthyle et/ou d'éthyle et/ou le méthacrylate de méthyle et/ou d'éthyle représentent en poids au moins 70% du poids total dudit polymère acrylique.

De préférence, le polymère acrylique est obtenu à partir d'un ou plusieurs monomères choisis parmi l'acrylate de méthyle, le méthacrylate de méthyle, l'acrylate d'éthyle, le méthacrylate d'éthyle

En général, dans la composition, le polymère fluoré semi-cristallin est du PVDF, le (co)polymère acrylique est du PMMA et que le rapport en poids du PVDF /PMMA est de 30/70 à 95/5.

Avantageusement, dans cette dernière composition, le rapport en poids du PVDF / PMMA est de 70/30 à 35/65.

De préférence, dans cette dernière composition, le rapport en poids PVDF /PMMA est de 60/40 à 40/60.

La Demanderesse a trouvé que l'ajout d'un agent nucléant du PVDF aux mélanges de PVDF et de PMMA de composition comprise entre PVDF/PMMA=95/5 et 30/70 permet de diminuer la taille des sphérolites obtenus, par rapport au même mélange PVDF/PMMA sans agent nucléant et ceci dans les mêmes conditions de refroidissement depuis l'état fondu.

La Demanderesse a également trouvé de manière inattendue que l'ajout d'agents nucléants du PVDF aux mélanges de PVDF et de PMMA de composition comprise entre PVDF/PMMA=60/40 et 40/60 permet d'obtenir une forte augmentation du taux de cristallisation lors d'un refroidissement depuis l'état fondu de ces mélanges.

Il est étonnant d'après la publication "Wittmann J.C. and Lotz B., J. Polym. Sci.;Polym. Phys., 19,1837, 1981" que les interactions cristallographiques entre PTFE et PVDF puissent opérer, car ces interactions cristallographiques sont en compétition avec les interactions de types liaison hydrogène bien connues d'après la publication " Bernstein R.E., Warhmund D.C, et al., *Polym. Eng. Sci* 18, 1220, 1979" pour les systèmes PVDF/PMMA. En d'autres termes, les interactions PVDF/PMMA n'empêchent pas les interactions de type cristallographiques à l'origine de l'efficacité du PTFE.

La suppression de l'effet nucléant par le polymère amorphe est en effet un problème majeur dans les systèmes compatibles associant polymère cristallin et amorphe, et a un impact considérable sur la nucléation. Cet effet peut être illustré par deux exemples démontrant la neutralisation des germes "naturels" et des germes "ajoutés" c'est-à-dire des agents de nucléation :

- (1) L'addition de très faibles quantités (0,5 à 5%) de poly(vinyle butyral) (PVB) à des polyesters linéaires (par exemple poly($\varepsilon$-caprolactone) (PCL)) entraîne un ralentissement considérable des vitesses de croissance, et une réduction dramatique de la densité de germes actifs : dans les mélanges, les sphérolites présentent des diamètres de 20 à 50 (voire plus) plus grands, la densité est réduite d'au moins deux, voire trois ordres de grandeurs (Keith H.D., Padden F.J. and Russel T.P., *Macromolécules,* 22, 666, 1989).

- (2) Le PVDF peut être nucléé par la sépiolite (un silicate de magnésium hydraté). Par contre cet effet nucléant est complètement inhibé dans les mélanges PVDF/PMMA. Cet effet est interprété comme étant du à " une perte ou une suppression de l'activité surfacique de la sépiolite dues aux interactions spécifiques entre la sépiolite et le milieu polymèrique" (Herrero C.R., Morales B. and Acosta J.L, J. *Appl. Polym. Sci.,* 51, 1189, 1994).

De manière inattendue par rapport aux deux publications précédentes, le PTFE n'est pas affecté par la présence du PMMA et maintient toute son activité nucléante.

Un avantage marquant obtenu grâce aux compositions de la présente invention tient aux taux de cristallinité élevé atteints par le PVDF dans le mélange ayant subi un passage par une phase liquide puis à une solidification soit par évaporation d'un solvant soit par refroidissement.

L'amélioration des cinétiques globales de cristallisation, en dépit du ralentissement considérable des vitesses linéaires de croissance dans le mélange (Voir Wang T.T. and Nishi T., *Macromolecules*, 10, 421, 1977) lié aux interactions PVDF/PMMA, permet d'atteindre des taux de cristallinité qui n'étaient observés à ce jour que dans les seuls PVDF purs. L'augmentation des températures de cristallisation obtenue par l'ajout d'agent de germination PTFE permet en effet de cristalliser le PVDF dans un domaine de température (et de vitesse de croissance du mélange) qui ne pouvait pas être normalement atteint dans les conditions opératoires industrielles.

L'application est particulièrement utile pour améliorer les propriétés des revêtements contenant du PVDF.

La présente invention comporte également un procédé de préparation d'une formulation sèche, à partir des compositions de l'invention, qui se caractérise en ce que l'on mélange un latex du polymère fluoré semi-cristallin avec l'agent nucléant, puis que l'on coagule et sèche le mélange obtenu pour récupérer une poudre, puis que l'on mélange cette poudre avec le polymère acrylique et éventuellement d'autres additifs tels que charges, colorants, agents d'aide à la mise en oeuvre par extrusion à une température de 150°C à 280°C, et que l'on refroidit l'extrudât avant de le broyer pour donner une poudre fine.

Une variante du procédé précédent qui évite de passer par une formulation intermédiaire isolée consiste en un procédé d'obtention du revêtement qui se caractérise en ce que l'on mélange un latex du polymère fluoré semi-cristallin avec l'agent nucléant, puis que l'on coagule et sèche le mélange obtenu pour récupérer une poudre, puis que l'on mélange cette poudre avec le polymère acrylique et éventuellement d'autres additifs tels que charges, colorants, agents d'aide à la mise en oeuvre par extrusion à une température de 150°C à 280°C directement en recouvrant le substrat à protéger.

La présente invention comprend également les formulations obtenues à partir des compositions précédentes.

Ainsi, en mélangeant un latex de polymère fluoré semi-cristallin avec l'agent nucléant, puis en coagulant et séchant le mélange obtenu pour récupérer une poudre, puis en mélangeant cette poudre avec le (co)polymère acrylique et éventuellement d'autres additifs tels que charges, colorants, agents d'aide à la mise en oeuvre par dispersion dans le solvant latent, on obtient une formulation qui se caractérise en ce qu'elle comprend un solvant latent du polymère fluoré semi-cristallin de ladite composition.

De manière analogue, on obtient une formulation qui se caractérise en ce qu'elle comprend de l'eau en tant qu'agent de dispersion de ladite composition. Le procédé d'obtention de cette formulation se caractérise en ce que l'on mélange un latex de polymère fluoré semi-cristallin avec un latex de l'agent nucléant, puis que l'on coagule et sèche le mélange obtenu pour récupérer une poudre, puis que l'on mélange cette poudre avec le (co)polymère acrylique et éventuellement d'autres additifs tels que charges, colorants, agents d'aide à la mise en oeuvre et que l'on disperse l'ensemble dans l'eau.

La formulation peut aussi se présenter sous la forme d'une poudre fine ayant des particules dont la taille la plus élevée est de l'ordre de plusieurs centaines de μm. Dans une telle poudre l'agent nucléant peut être par exemple du PTFE sous la forme de particules d'une taille allant de 0,05 à 5 μm ou mieux de 0,05 à 0,5 μm. Le procédé d'obtention de cette poudre fine se caractérise en ce que la composition se présentant sous la forme d'une poudre grossière contenant éventuellement des additifs tels que charges, colorants, agents d'aide à la mise en oeuvre, on procède à un broyage de cette poudre.

La présente invention concerne également les revêtements obtenus à partir des formulations ci-dessus. De tels revêtements possèdent une composition globale polymère fluoré semi-cristallin / modifiant acrylique identique à celle de la composition initiale qui a été mise en oeuvre.

Chacun de ces revêtements se caractérise tout d'abord en ce qu'il est sous la forme d'un film continu recouvrant le substrat avec une forte adhésion, ce film comportant des sphérolites d'une taille inférieure à 1 μm.

La présente invention comporte également le procédé d'obtention du revêtement à partir d'une des formulations précédente caractérisé en ce qu'il comporte une étape de cuisson du substrat recouvert de la formulation à une température T suffisamment élevée pour obtenir une phase liquide contenant le polymère fluoré semi-cristallin et dans laquelle l'agent nucléant reste au moins partiellement à l'état de germes cristallins solides, cette température T étant inférieure à la température de fusion de l'agent nucléant, et une étape de refroidissement dans laquelle le polymère fluoré semi-cristallin cristallise au moins partiellement en formant des sphérolites d'une taille inférieure à 1 μm.

De préférence, la température de cuisson va de 150° à 275°C.

On obtient ainsi un revêtement susceptible d'être obtenu par la cuisson et le refroidissement d'un substrat recouvert de la formulation, caractérisé en ce qu'il est sous la forme d'un film continu adhérant au substrat en le recouvrant, ce film comportant des sphérolites de polymère fluoré d'une taille inférieure à 1 μm et en ce que la composition de ce film est globalement la même que la composition ayant servi à préparer la formulation.

Ce revêtement a l'avantage d'être stable dans la durée et d'être plus brillant que les revêtements de compositions semblables mais sans agent nucléant.

La présente invention sera mieux comprise à l'aide des exemples suivants donnés à titre d'illustration.

**Partie expérimentale**

**Exemple 1 :** Augmentation du taux de cristallinité par addition de PTFE dans les mélanges PVDF/PMMA.

**Préparation des formulations :**

Une première série de formulations a été préparée en mélangeant des latex de PVDF et de PMMA dans des proportions allant de 80/20 à 40/60 (voir tableau II). Une seconde série de formulations a été préparée en utilisant les mélanges décrits ci-dessus auxquels nous avons ajouté 0,5% de PTFE sous forme de latex (voir tableau III).

Le latex de PVDF est un latex de Kynar® 740 préparé selon les brevets US 3857827 ; 4360652 , 4569978 ; 3051677 ;3178399 ;5093427 ;4076929 ; 5,543,217.

Le Kynar® 740 est commercialisé par la Société Elf Atochem. Le PTFE est un latex commercialisé par Dupont sous la référence Zonyl 30N.

Le latex de PMMA a été obtenu par polymérisation du méthacrylate de méthyle selon la recette suivante :

On introduit dans un réacteur en acier inoxydable, muni d'un agitateur :

- Eau distillée        601 g
- Hydrogéno phosphonate de sodium        1.76 g
- Sodium dodécyl sulfate        14.7 g dissous dans 53.3 g d'eau
- Méthacrylate de méthyle        504.1 g

- Sodium métabisulfite      0.42 g dissous dans 9 g d'eau
- Terdodécyl mercaptan      1.77 g

On chauffe le réacteur à 63°C avant d'ajouter :

- Potassium persulfate      0.67 g dissous dans 15 g d'eau

On observe après 5 minutes d'inhibition un exotherme 35 qui amène la température du réacteur à 110°C. On refroidit à 80°C, et on ajoute :

- Métabisulfite de sodium      0.068 g dissous dans 2 g d'eau
- Terbutyl hydroperoxide      0.252 g dissous dans 2 g d'eau

Après une heure d'agitation, le produit final est récupéré. On mesure les caractéristiques suivantes :

- Conversion du monomère en polymère (gravimétrie) : 99.5%
- Taille des particules de latex : 80 nm
- Masse moléculaire (chromatographie d'exclusion stérique) : $M_n$=58500 g/mol, $M_w$=461000 g/mol

## Coagulation :

Les différentes formulations sont congelées afin de déstabiliser les latex, puis décongelées à température ambiante et centrifugées à 20.000 trs/min pendant 30 minutes. La phase surnageante est éliminée. Les échantillons sont ensuite lavés par redispersion dans de l'eau distillée et centrifugation, opération qui est répétée trois fois. Finalement, l'échantillon est séché sous vide à 50°C pendant 24 heures. On vérifie que la composition des formulation n'a pas été modifiée par l'opération de coagulation en déterminant le ratio PVDF/PMMA par analyse thermogravimétrique.

## Analyse thermique différentielle :

La température de cristallisation et le taux de cristallinité ($\alpha$) des échantillons ainsi obtenus sont mesurés par Analyse thermique différentielle. Les conditions de mesure sont les suivantes :

vitesse de chauffe et de refroidissement constantes et égales à 10°C/min,
l'échantillon est porté à 200°C, température qui est maintenue pendant 10 minutes (chauffe 1),
l'échantillon est recristallisé par refroidissement jusqu'à 20°C (refroidissement 1),
l'échantillon est porté à 200°C (chauffe 2).

Les températures de cristallisation et les taux de cristallinité ($\alpha$) mesurés pour les différents échantillons sont reportés dans le tableau II et III ci-dessous.
Notons que le taux de cristallinité est déterminé via la mesure de l'enthalpie de cristallisation (rapportée à la teneur en PVDF dans le mélange).

## Discussion :

L'augmentation de la teneur en PMMA pour les formulations ne contenant pas de PTFE entraîne une diminution de la température de cristallisation et du taux de cristallinité. De plus, au-delà de 40% de PMMA, la cristallisation lors du premier refroidissement n'est plus totale et peut se poursuivre lors de la remontée en température.
L'ajout de PTFE dans ces mélanges se traduit dans tous les cas par une augmentation de la température de cristallisation et une cristallisation complète lors du premier refroidissement. Par ailleurs, comme cela est indiqué dans le graphique 1 ci-après, le taux de cristallinité, s'il n'est pas déjà à sa valeur maximale (à savoir autour de 45%), est augmenté de manière significative. En effet, les mélanges contenant jusqu'à 50% de PMMA atteignent le taux de cristallinité maximal, alors que sans l'ajout de PTFE seuls des mélanges contenant au minimum 70% de PVDF pouvaient atteindre de tels taux. Pour le mélange nucléé contenant 60% de PMMA le taux de cristallinité maximal n'est pas atteint, mais l'augmentation par rapport au même mélange non nucléé est non négligeable.

**Tableau II**

Température de cristallisation et taux de cristallinité des mélanges PVDF/PMMA ne contenant pas de PTFE.

| | Formulations PVDF/PMMA | Mesurés lors du premier refroidissement | | Mesurés lors de la Seconde chauffe | | $\alpha$ TOTAL (en % de PVDF) |
|---|---|---|---|---|---|---|
| | | Tc(°C) | $\alpha$ (en % de PVDF) | Tc (°C) | $\alpha$ (en % de PVDF) | |
| Sans PTFE | 100/0 | 132,0 | 46,0 | - | - | 46,0 |
| | 80/20 | 118,7 | 45,6 | - | - | 45,6 |
| | 70/30 | 116,1 | 42,3 | - | - | 42,3 |
| | 60/40 | 112,1 | 10,8 | 96,4 | 15,2 | 26,0 |
| | 50/50 | - | 0 | 93,0 | 13,5 | 20,0 |
| | 40/60 | - | 0 | 90,6 | 12,0 | 12,0 |

**Tableau III**

Température de cristallisation et taux de cristallinité des mélanges PVDF/PMMA contenant 0,5% de PTFE.

| | Formulations PVDF/PMMA | Mesurés lors du premier refroidissement | |
|---|---|---|---|
| | | Tc(°C) | $\alpha$ (en % de PVDF) |
| Avec PTFE | 100/0 | 143,4 | 45,6 |
| | 80/20 | 138,5 | 43,0 |
| | 70/30 | 132,3 | 41,7 |
| | 60/40 | 131,1 | 42,0 |
| | 50/50 | 126,6 | 44,0 |
| | 40/60 | 127,6 | 29,0 |

## Graphique 1

### Augmentation du taux de cristallinité mesuré lors du refroidissement de mélanges PVDF/PMMA contenant 0.5% de PTFE

**Exemple 2 : compositions, Formulations et revêtements obtenus avec le copolymère méthyle méthacrylate/ éthyle acrylate en tant que polymère acrylique.**

Les produits de départ utilisés sont les suivants :

-   le PVDF est commercialisé par ELF ATOCHEM sous la marque KYNAR®500. La température de fusion est de 160°C et la viscosité mesurée sur un rhéomètre capillaire à 230°C et $100^{-s}$ est de 2900 - 3300 Pa.s.

Ce PVDF est sous la forme d'un latex formant des billes rondes de taille et de forme homogènes (diamètre d'environ 0,2 μm en moyenne).

Ce latex et sa méthode de préparation sont bien connus : voir par exemple les brevets US 3857827 ; 4360652 ; 4569978 ;3051677 ;3178399 ;5093427 ;4076929 ; 5,543,217.

Agent nucléant :

1/ du PTFE sous forme d'un latex commercialisé par Du Pont de Nemours sous la référence Zonyl 3554 N.
2/ du PTFE sous forme d'un latex commercialisé par Du Pont de Nemours sous la référence Zonyl 3667.

Le Zonyl 3554 N examiné par microscopie électronique montre une structure variée de particules formant des agglomérats et des chapelets dont la plus grande dimension varie de 0,05 à 0,25 µm.

Le modifiant acrylique est un copolymère PMMA / EA à 40 % dans le toluène, commercialisé par la Société Rohm & Haas sous la référence Paraloid B-44S.

Le $TiO_2$ est obtenu auprès de la société Dupont sous la reéférence Ti-pure R-960.

Le solvant latent choisi est de l'isophorone.

**A) Préparation des formulations**

a) Préparation du mélange PVDF + PTFE

On mélange les deux latex dans un réacteur agité, à température ambiante (20°C), dans les proportions suivantes :

| Essai | PTFE | Taux de PTFE en % en poids de matière sèche |
|-------|-------|---------------------------------------------|
| 1 | - | 0 |
| 2 | 3667 | 0,1 |
| 3 | 3667 | 0,5 |
| 4 | 3554N | 0,5 |
| 5 | 3667 | 1 |

Le mélange des deux latex est à chaque essai coagulé par deux cycles de congélation / décongélation, filtré, lavé à l'eau distillée et séché à l'étuve pendant 12 heures. On obtient alors 5 poudres distinctes $P_1$, $P_2$, $P_3$, $P_4$, $P_5$ correspondant respectivement aux essais 1, 2, 3, 4, 5.

Chacune de ces poudres PVDF / PTFE entre dans la composition de deux formulations distinctes : une formulation sans pigment $F_t$ conduisant à un revêtement final transparent et une formulation $F_p$ avec un pigment conduisant à un revêtement final opaque.

On prépare ainsi 10 formulations $F_{t1}$, $F_{t2}$, $F_{t3}$, $F_{t4}$, $F_{t5}$ et $F_{p1}$, $F_{p2}$, $F_{p3}$, $F_{p4}$ et $F_{p5}$.

Les formulations de type $F_t$ ont la composition suivante en poids :

| 24,5 % | de $P_n$, n entier de 1 à 5 |
|--------|-----------------------------|
| 26,2 % | de Paraloid B-44S |
| 49.3 % | isophorone |
| 100,0 % | au total. |

Les formulations de type $F_p$ ont la composition suivante en poids :

| 20,5 % | de $P_n$, n entier de 1 à 5 |
|--------|-----------------------------|
| 21,9 % | de Paraloid B-44S |
| 41,8 % | isophorone |
| 15, 8% | de $TiO_2$ sous la forme rutile. |
| 100,0 % | au total. |

**B) Préparation des revêtements**

Chacune de ces 10 formulations est appliquée sur deux panneaux en aluminium (Q-panel Lab products, à Cleveland, OH 30 USA) et sont cuites selon deux procédures distinctes.

a).cuisson de type "enduction sur bobine"

conditions :    -    température du four 275°C
       -    temps de cuisson 90 secondes
       -    puis refroidissement par trempage immédiat dans de l'eau à 20°C.

b) cuisson de type "atomisation par buse"

conditions :   - température du four 240°C
               - temps de cuisson 15 min.
               - Après cuisson, les échantillons sont retirés du four et on les laisse refroidir à l'air ambiant.

Ainsi, on prépare au total 20 revêtements. Ceux-ci sont soumis à des tests normalisés pour quantifier leurs propriétés.

- "flexibilité (pliage) selon ASTM D 4145
- dureté "pencil hardness" selon ASTM D 3363
- résistance au solvant selon NCCA 4.2.11 ("National Coil Coaters Association")
- brillance "60 degree gloss" selon ASTM D 523.

Pour l'analyse par ATD (Analyse thermique différentielle) et l'examen par microscopie optique, les formulations ont été appliquées sur des panneaux teflonés, puis ceux-ci ont été soumis aux deux modes de cuisson a) ou b) ci-dessus. Les films peuvent ainsi être décollés du support. On a vérifié que la nature du support (aluminium ou teflon) n'a pas d'influence sur la recristllisation des films.
Les tableaux IV, V et VI indiquent les résultats obtenus.

**Discussion**

1. Formulations avec pigments : Propriétés générales (tableau IV)

A) Les revêtements obtenus par cuisson de type enduction et refroidissement à l'eau (trempage).

Tous les revêtements, nucléés ou non, montrent une bonne adhésion au substrat métallique. Tous les revêtements dépassent 100 % d'adhésion même après exposition à l'eau bouillante. De même tous les revêtements résistent au test de flexibilité « O-T bend » et ont une résistance à l'impact jusqu'à la cassure du substrat en aluminium. Leur résistance à l'abrasion est similaire.
Les revêtements nucléés en PTFE ont de meilleures performances en terme de dureté, résistance au solvant méthyléthylcétone (MEK) et en terme de brillance. Pour le PTFE 3667, on observe une amélioration notable de ces propriétés dès la concentration de 0,1 % en poids par rapport au PVDF de la formulation. L'observation des films par microscopie optique (x500) ne permets pas de mesurer la taille des cristallites, que ce soit pour les films nucléé au PTFE et non nucléés.

B) Les revêtements obtenus par cuisson de type atomisation et refroidissement à l'air.

Tous les revêtements, nucléés ou non, montrent une bonne adhésion au substrat métallique. Tous les revêtements dépassent 100 % d'adhésion même après exposition à l'eau bouillante. De même tous les revêtements résistent au test de flexibilité « O-T bend » et ont une résistance à l'impact jusqu'à la cassure du substrat en aluminium. Leur résistance à l'abrasion est similaire.
Les revêtements nucléés en PTFE ont de meilleures performances en terme de dureté et en terme de brillance. Pour le PTFE 3667, on observe une amélioration notable de ces propriétés et de la résistance au solvant à la concentration de 0,1 % en poids par rapport au PVDF de la formulation. L'observation des films par microscopie optique (x500) montre la formation des sphérolites de 20 à 40 µm dans le cas des revetements non nucléés, alors que la taille des cristallites dans le cas des revetements nucléé au PTFE est inférieure au micron.

2/ Formulation avec pigments : Analyse thermique différentielle

Le tableau IV montre que la cristallinité d'un revêtement est pratiquement constante sur la base des valeurs H de chaleur de fusion indiquées dans les colonnes. Les chaleurs de fusions sont en J/gramme de polymère dans la formulation, pour tenir compte de l'effet de dilution du à la présence du pigment. Pour cette composition (PVDF/PMMA=70/30), l'agent nucléant n'a pas d'influence sur le taux de cristallinité.
On observe plus particulièrement une augmentation de 10° à 14°C des températures de cristallisation mesurées lors du refroidissement, ce qui est un effet caractéristique de l'action d'un agent nucléant.

3/ Formulation sans pigments : Analyse thermique différentielle

Le tableau V montre qu'en l'absence de pigment, la cristallinité d'un revêtement est plus faible pour un revêtement refroidit dans l'eau. Pour cette composition (PVDF/PMMA=70/30), l'agent nucléant n'a pas d'influence sur le taux de cristallinité.

On observe plus particulièrement une augmentation de 15° à 18 °C des températures de cristallisation mesurées lors du refroidissement, ce qui est un effet caractéristique de l'action d'un agent nucléant.

**Exemple 3**

On procède comme décrit à l'exemple 2 pour la réalisation d'une formulation analogue à $F_{t5}$ et $F_{t1}$ sauf que l'on remplace le PVDF par un copolymère ($VF_2$/HFP) contenant 7% en poids de comonomère HFP et 93% de $VF_2$. On mesure par ATD une élévation de 19° C de la température de cristallisation mesurée lors du refroidissement pour l'échantillon contenant l'agent nucléant par rapport à l'échantillon témoin sans agent nucléant.

## Tableau IV

| Formulations avec pigment $TiO_2$ cuisson de type enduction et refroidissement à l'eau | Propriétés des revêtements obtenus après cuisson | | | |
|---|---|---|---|---|
| | Dureté | MEK résistance | 60° brillance | Abrasion au jet de sable l/mil |
| $F_{p1}$ (sans agent nucléant) * | F | 751 | 17 | 52 |
| $F_{p2}$ (+ 0,1 % de PTFE 3667) | H | 1010 | 53 | - |
| $F_{p3}$ (+ 0,5 % PTFE 3667 | 2H | 1079 | 48 | - |
| $F_{p4}$ (+1,0 % PTFE 3667) | 2H | 864 | 48 | 54 |
| $F_{p5}$ (+ 0,5 % PTFE 3554N) | F | 1106 | 48 | - |
| Formulations avec pigment $TiO_2$ cuisson de type atomisation et refroidissement à l'air | Dureté | MEK résistance | 60° brillance | Abrasion au jet de sable l/mil |
| $F_{p1}$ (sans agent nucléant) * | F | 2028 | 17 | 49 |
| $F_{p2}$ (+ 0,1 % PTFE 3667) | 2H | 2361 | 51 | - |
| $F_{p3}$ (+ 0,5 % PTFE 3667 | 2H | 1323 | 47 | - |
| $F_{p4}$ (+ 1 % PTFE 3667) | 2H | 1428 | 53 | 51 |
| $F_{p5}$ (+ 0,5 % PTFE 3554N) | 2H | 1412 | 49 | - |

\* Formulation et revêtement comparatifs

EP 1 114 099 B1

EP 1 114 099 B1

**Tableau V**

| Formulations avec pigment $TiO_2$ cuisson de type enduction et refroidissement à l'eau | Analyse thermique différentielle | | | | | |
|---|---|---|---|---|---|---|
| | 1er chauffage | | Refroidissement | | 2$^{ème}$ chauffage | |
| | Température de fusion en °C | $H^*$ (J/g) | Température de cristallisation en °C | $H^{**}$ (J/g) | Température de fusion en °C | $H^{**}$ (J/g) |
| $F_{p1}$ * | 157 | 28,7 | 111,0 | 30,3 | 157,2 | 27,8 |
| $F_{p2}$ | 156,8 | 31,5 | 124,1 | 31,7 | 155,6 | 30,5 |
| $F_{p3}$ | 157,0 | 26,8 | 124,8 | 32,4 | 156,0 | 30,7 |
| $F_{p4}$ | 156,4 | 24,7 | 125,7 | 32,9 | 155,6 | 30,5 |
| $F_{p5}$ | 156,2 | 24,8 | 124,2 | 32,1 | 155,3 | 30,6 |
| Formulations avec pigment $TiO_2$ cuisson par atomisation et refroidissement à l'air | 1er chauffage | | Refroidissement | | 2ème chauffage | |
| | Température de fusion en °C | $H^{**}$ (J/g) | Température de cristallisation en °C | $H^{**}$ (J/g) | Température de fusion en °C | $H^{**}$ (J/g) |
| $F_{p1}$ * | 156,3 | 30,0 | 114,7 | 32 | 156,8 | 31,7 |
| $F_{p2}$ | 156,8 | 29,9 | 123,8 | 32,9 | 155,8 | 32,5 |
| $F_{p3}$ | 156,7 | 30,7 | 125,0 | 33,7 | 156,1 | 31,9 |
| $F_{p4}$ | 156,0 | 31,2 | 125,7 | 33,0 | 155,8 | 32,7 |
| $F_{p5}$ | 156,4 | 31,4 | 123,9 | 33,5 | 155,5 | 32,5 |

\* Formulation et revêtement comparatifs

**Tableau VI**

| Formulations sans pigment TiO$_2$ cuisson de type enduction et refroidissement à l'eau | Analyse thermique différentielle ? | | | | | |
|---|---|---|---|---|---|---|
| | 1er chauffage | | Refroidissement | | 2ème chauffage | |
| | Température de fusion en °C | H (J/g) | Température de cristallisation en °C | H (J/g) | Température de fusion en °C | H (J/g) |
| F$_{t1}$ * sans agent nucléant | 156,1 | 19,4 | 114,7 | 28,4 | 156,1 | 28.3 |
| F$_{t2}$ 0,1 % PTFE 3667 | 156,4 | 19,2 | 128,2 | 29,4 | 156,1 | 30.9 |
| F$_{t3}$ 0,5 % PTFE 3667 | 156,1 | 22,0 | 130,9 | 29,9 | 156,6 | 32.0 |
| F$_{t4}$ 1 % PTFE 3667 | 157,6 | 21,1 | 130,8 | 29,0 | 158,3 | 30.4 |
| F$_{t5}$ 0,5 % PTFE 3554N | 156,5 | 18,8 | 131,1 | 30,5 | 157,3 | 30.9 |
| Formulations sans pigment cuisson par atomisation et refroidissement à l'air | 1er chauffage | | Refroidissement | | 2ème chauffage | |
| | Température de fusion en °C | H (J/g) | Température de cristallisation en °C | H (J/g) | Température de fusion en °C | H (J/g) |
| F$_{t1}$ * sans agent nucléant | 156,7 | 29,4 | 112,7 | 31,9 | 155,8 | 33,4 |
| F$_{t2}$ 0,1 % PTFE 3667 | 156,6 | 31,4 | 127,9 | 34,2 | 157,3 | - |
| F$_{t3}$ 0,5 % PTFE 3667 | 155,0 | 32,5 | 130,7 | 34,4 | 157,0 | 34,1 |
| F$_{t4}$ 1 % PTFE 3667 | 155,3 | 30,9 | 131,1 | 34,3 | 156,6 | 34,2 |
| F$_{t5}$ 0,5 % PTFE 3554N | 156,6 | 31,0 | 131,1 | 34,0 | 156,9 | 33,1 |

\* Formulation et revêtement comparatifs

**Revendications**

1. Composition polymérique comportant un mélange de polymères comprenant :

   (a) un polymère fluoré semi-cristallin,
   (b) un polymère acrylique, **caractérisée en ce qu'**elle comprend en outre :
   (c) de 0.01 à 20% en poids, par rapport au poids total du polymère fluoré semi-cristallin et du polymère acrylique, d'un agent nucléant sous la forme de particules ayant un point de fusion supérieur à celui du polymère fluoré semi-cristallin,

   dans laquelle l'agent nucléant est un homopolymère de tétrafluoéthylène ou un copolymère de tétrafluoéthylène avec un composé fluoré éthylénique et **en ce que** les particules ont une taille de 0,05 μm à 0,5 μm.

2. Composition selon la revendication 1, **caractérisée en ce que** le polymère fluoré semi-cristallin est un homopolymère du difluorure de vinylidène ou un copolymère du difluorure de vinylidène avec un monomère fluoré éthylénique ou un composé éthylénique non fluorée ou un diène non fluoré, monomères copolymérisables avec le fluorure de vinylidène.

3. Composition selon la revendication 2, **caractérisée en ce que** le monomère fluoré éthylénique est choisi parmi le fluorure de vinyle, l'hexafluoropropylène, le trifluoroéthylène, le trifluorochloroéthylène, le tétrafluoroéthylène ou l'hexafluoro-isobutylène, le monomère éthylénique non fluorée est choisi dans le groupe constitué par l'éther cyclohexylvinylique et l'éther hydroxyéthylvinylique, et le diène non fluoré est choisi dans le groupe constitué par le butadiène, l'isoprène et le chloroprène.

4. Composition selon la revendication 2, **caractérisée en ce que** le polymère fluoré semi-cristallin est un copolymère de difluorure de vinylidène avec de 0.1% à 20% en moles de fluorure de vinyle ou d'hexafluoropropylène ou de trifluoroéthylène ou de trifluorochloroéthylène ou de tétrafluoroéthylène.

5. Composition selon la revendication 2, **caractérisée en ce que** le polymère fluoré semi-cristallin est un homopolymère de difluorure de vinylidène.

6. Composition selon l'une des revendications de 1 à 5, **caractérisée en ce que** le polymère acrylique (modifiant acrylique) est choisi parmi des copolymères d'un ou plusieurs esters méthylique ou éthylique de l'acide acrylique ou de l'acide méthacrylique, optionnellement avec d'autres monomères insaturés polymérisables choisis parmi :

   • les autres esters d'alkyle de l'acide acrylique ou de l'acide méthacrylique, tels que l'acrylate de butyle, l'acrylate de 2-ethylhexyle,
   • les styreniques tels que le styrène, l'alphaméthylstyrène,
   • les nitriles, tels l'acrylonitrile et le méthacrylonitrile,
   • les vinyliques, tel l'acétate de vinyle ou le chlorure de vinyle,

   avec la condition supplémentaire que l'acrylate de méthyle et/ou d'éthyle et/ou le méthacrylate de méthyle et/ou d'éthyle représentent en poids au moins 70% du poids total dudit polymère acrylique.

7. Composition selon la revendication 6, **caractérisée en ce que** le polymère acrylique est obtenu à partir d'un ou plusieurs monomères choisis parmi l'acrylate de méthyle, le méthacrylate de méthyle, l'acrylate d'éthyle, le méthacrylate d'éthyle.

8. Composition selon l'une des revendications 1 à 7, **caractérisée en ce que** l'agent nucléant est sous forme d'un latex.

9. Composition selon l'une des revendications 1 à 7, **caractérisée en ce que** l'agent nucléant, de préférence sous la forme d'un latex, est choisi parmi un copolymère de tétrafluoroéthylène comprenant de 0.1% à 20% en moles de fluorure de vinylidène, de fluorure de vinyle, d'hexafluoropropylène de trifluoroéthylène, de trifluorochloroéthylène ou d'hexafluoro-isobutylène, ou encore parmi le poly(éthylène-co-tétrafluoroéthylène) (ETFE), le poly(tétrafluoroéthylène-co-perfluorovinyléthers) (PFA), et le PVDF irradié.

10. Composition selon l'une des revendications 1 à 9, **caractérisée en ce que** le polymère fluoré semi-cristallin est du PVDF, le (co) polymère acrylique est du PMMA et que le rapport en poids PVDF/PMMA est de 95/5 à 30/70.

11. Composition selon la revendication 10, **caractérisée en ce que** le rapport en poids PVDF/PMMA est de 70/30 à 35/65.

12. Composition selon la revendication 10, **caractérisé en ce que** le rapport en poids PVDF/PMMA est de 60/40 à 40/60.

13. Procédé de préparation de la composition selon l'une des revendications 1 à12, **caractérisé en ce que** l'on mélange un latex du polymère fluoré semi-cristallin avec l'agent nucléant, puis que l'on coagule et sèche le mélange obtenu pour récupérer une poudre, puis que l'on mélangé cette poudre avec le polymère acrylique et éventuellement d'autres additifs tels que charges, colorants, agents d'aide à la mise en oeuvre par extrusion à une température de 150°C à 280°C.

14. Formulation à base d'une composition selon l'une des revendications 1 à 12, **caractérisée en ce qu'**elle comprend un solvant latent du polymère fluoré semicristallin de ladite composition.

15. Formulation à base d'une composition selon l'une des revendications 1 à 12, **caractérisée en ce qu'**elle comprend de l'eau en tant qu'agent de dispersion de ladite composition.

16. Procédé de préparation de la formulation selon la revendication 14, **caractérisé en ce que** l'on mélange un latex de polymère fluoré semi-cristallin avec l'agent nucléant, puis que l'on coagule et sèche le mélange obtenu pour récupérer une poudre, puis que l'on mélange cette poudre avec le (co) polymère acrylique et éventuellement d'autres additifs tels que charges, colorants, agents d'aide à la mise en oeuvre et que l'on disperse dans le solvant latent.

17. Procédé de préparation de la formulation selon la revendication 15, **caractérisé en ce que** l'on mélange un latex de polymère fluoré semi-cristallin avec l'agent nucléant, puis que l'on coagule et sèche le mélange obtenu pour récupérer une poudre, puis que l'on mélange cette poudre avec le (co) polymère acrylique et éventuellement d'autres additifs tels que charges, colorants, agents d'aide à la mise en oeuvre et que l'on disperse l'ensemble dans l'eau.

18. Procédé de préparation de la formulation à base d'une composition selon l'une des revendications 1 à 12 et se présentant sous forme de poudre, **caractérisé en ce que** l'on mélange un latex du polymère fluoré semi-cristallin avec l'agent nucléant, puis que l'on coagule et sèche le mélange obtenu pour récupérer une poudre, puis que l'on mélange cette poudre avec le polymère acrylique et éventuellement d'autres additifs tels que charges, colorants, agents d'aide à la mise en oeuvre par extrusion à une température de 150°C à 280°C, et que l'on refroidit l'extrudât avant de le broyer pour donner une poudre fine.

19. Procédé d'obtention d'un revêtement à partir d'une formulation selon l'une des revendications 14 à 15, **caractérisé en ce qu'**il comporte une étape de cuisson du substrat recouvert de la formulation à une température T suffisamment élevée pour obtenir une phase liquide contenant le polymère fluoré semi-cristallin et dans laquelle l'agent nucléant reste au moins partiellement à l'état de germes cristallins solides, cette température T étant inférieure à la température de fusion de l'agent nucléant, et une étape de refroidissement dans laquelle le polymère fluoré semicristallin cristallise au moins partiellement en formant des sphérolites d'une taille inférieure à 5 $\mu$m.

20. Procédé d'obtention d'un revêtement à partir d'une composition selon l'une des revendications 1 à 12, **caractérisé en ce que** l'on mélange un latex du polymère fluoré semi-cristallin avec l'agent nucléant, puis que l'on coagule et sèche le mélange obtenu pour récupérer une poudre, puis que l'on mélange cette poudre avec le polymère acrylique et éventuellement d'autres additifs tels que charges, colorants, agents d'aide à la mise en oeuvre par extrusion à une température de150°C à 280°C directement en recouvrant le substrat à protéger.

21. Revêtement susceptible d'être obtenu par la cuisson et le refroidissement d'un substrat recouvert de la formulation selon l'une des revendications 14 à 15 ou encore par le procédé de la revendication 20, **caractérisé en ce qu'**il est sous la forme d'un film continu adhérant au substrat en le recouvrant, ce film comportant des sphérolites de polymère fluoré d'une taille inférieure à 5 $\mu$m et **en ce que** la composition de ce film est la même que la composition selon l'une des revendications 1 à 12.

**Patentansprüche**

1. Polymerzusammensetzung, enthaltend eine Mischung von Polymeren, enthaltend:

   (a) ein teilkristallines Fluorpolymer und
   (b) ein Acrylpolymer, **dadurch gekennzeichnet, daß** sie außerdem
   (c) 0,01 bis 20 Gew.-%, bezogen auf das Gesamtgewicht des teilkristallinen Fluorpolymers und des Acrylpolymers, eines teilchenförmigen Nukleierungsmittels mit einem höheren Schmelzpunkt als das teilkristalline Fluorpolymer, wobei es sich bei dem Nukleierungsmittel um ein Homopolymer von Tetrafluorethylen oder ein Copolymer von Tetrafluorethylen mit einer ethylenischen fluorierten Verbindung handelt, enthält, und die Teilchen eine Größe von 0,05 μm bis 0,5 μm aufweisen.

2. Zusammensetzung nach Anspruch 1, **dadurch gekennzeichnet, daß** es sich bei dem teilkristallinen Fluorpolymer um ein Homopolymer von Vinylidendifluorid oder ein Copolymer von Vinylidendifluorid mit einem ethylenischen fluorierten Monomer oder einer nicht fluorierten ethylenischen Verbindung oder einem nicht fluorierten Dien handelt, wobei diese Monomere mit Vinylidenfluorid copolymerisierbar sind.

3. Zusammensetzung nach Anspruch 2, **dadurch gekennzeichnet, daß** das ethylenische fluorierte Monomer unter Vinylfluorid, Hexafluorpropylen, Trifluorethylen, Trifluorchlorethylen, Tetrafluorethylen oder Hexafluorisobutylen ausgewählt ist, das nicht fluorierte ethylenische Monomer aus der Gruppe bestehend aus Cyclohexylvinylether und Hydroxyethylenvinylether ausgewählt ist und das nicht fluorierte Dien aus der Gruppe bestehend aus Butadien, Isopren und Chloropren ausgewählt ist.

4. Zusammensetzung nach Anspruch 2, **dadurch gekennzeichnet, daß** es sich bei dem teilkristallinen Fluorpolymer um ein Copolymer von Vinylidendifluorid mit 0,1 bis 20 Mol-% Vinylfluorid oder Hexafluorpropylen oder Trifluorethylen oder Trifluorchlorethylen oder Tetrafluorethylen handelt.

5. Zusammensetzung nach Anspruch 2, **dadurch gekennzeichnet, daß** es sich bei dem teilkristallinen Fluorpolymer um ein Homopolymer von Vinylidendifluorid handelt.

6. Zusammensetzung nach einem der Ansprüche 1 bis 5, **dadurch gekennzeichnet, daß** das Acrylpolymer (der Acrylmodifikator) unter Copolymeren eines oder mehrerer Methyl- oder Ethylester von Acrylsäure oder Methacrylsäure, gegebenenfalls mit anderen polymerisierbaren ungesättigten Monomeren, die unter:

   • anderen Alkylestern von Acrylsäure oder Methacrylsäure, wie Butylacrylat oder 2-Ethylhexylacrylat,
   • Styrolverbindungen, wie Styrol oder alpha-Methylstyrol,
   • Nitrilen, wie Acrylnitril und Methacrylnitril,
   • Vinylverbindungen, wie Vinylacetat oder Vinylchlorid,

   ausgewählt sind, ausgewählt ist, mit der zusätzlichen Maßgabe, daß das Methylacrylat und/oder das Ethylacrylat und/oder das Methylmethacrylat und/oder das Ethylmethacrylat mindestens 70 Gew.-% des gesamten Acrylpolymers ausmachen.

7. Zusammensetzung nach Anspruch 6, **dadurch gekennzeichnet, daß** das Acrylpolymer aus einem oder mehreren unter Methylacrylat, Methylmethacrylat, Ethylacrylat und Ethylmethacrylat ausgewählten Monomeren erhältlich ist.

8. Zusammensetzung nach einem der Ansprüche 1 bis 7, **dadurch gekennzeichnet, daß** das Nukleierungsmittel in Form eines Latex vorliegt.

9. Zusammensetzung nach einem der Ansprüche 1 bis 7, **dadurch gekennzeichnet, daß** das Nukleierungsmittel, vorzugsweise in Form eines Latex, unter einem Copolymer von Tetrafluorethylen mit mit 0,1 bis 20 Mol-% Vinylidenfluorid, Vinylfluorid, Hexafluorpropylen, Trifluorethylen, Trifluorchlorethylen oder Hexafluorisobutylen oder auch Poly(ethylen-co-tetrafluorethylen) (ETFE), Poly-(tetrafluorethylen-co-perfluorvinylethern) (PFA) und bestrahltem PVDF ausgewählt ist.

10. Zusammensetzung nach einem der Ansprüche 1 bis 9, **dadurch gekennzeichnet, daß** es sich bei dem teilkristallinen Fluorpolymer um PVDF handelt, es sich bei dem Acryl(co)polymer um PMMA handelt und das PVDF/PMMA-Gewichtsverhältnis 95/5 bis 30/70 beträgt.

**11.** Zusammensetzung nach Anspruch 10, **dadurch gekennzeichnet, daß** das PVDF/PMMA-Gewichtsverhältnis 70/30 bis 35/65 beträgt.

**12.** Zusammensetzung nach Anspruch 10, **dadurch gekennzeichnet, daß** das PVDF/PMMA-Gewichtsverhältnis 60/40 bis 40/60 beträgt.

**13.** Verfahren zur Herstellung einer Zusammensetzung gemäß einem der Ansprüche 1 bis 12, **dadurch gekennzeichnet, daß** man einen Latex des teilkristallinen Fluorpolymers mit dem Nukleierungsmittel vermischt, dann die erhaltene Mischung koaguliert und trocknet, wobei man ein Pulver gewinnt, und dann dieses Pulver durch Extrudieren bei einer Temperatur von 150°C bis 280°C mit dem Acrylpolymer und gegebenenfalls anderen Additiven wie Füllstoffen, Farbmitteln oder Verarbeitungshilfsmitteln vermischt.

**14.** Formulierung auf Basis einer Zusammensetzung gemäß einem der Ansprüche 1 bis 12, **dadurch gekennzeichnet, daß** sie ein latentes Lösungsmittel für das teilkristalline Fluorpolymer der Zusammensetzung enthält.

**15.** Formulierung auf Basis einer Zusammensetzung gemäß einem der Ansprüche 1 bis 12, **dadurch gekennzeichnet, daß** sie als Dispergiermittel für die Zusammensetzung Wasser enthält.

**16.** Verfahren zur Herstellung einer Formulierung gemäß Anspruch 14, **dadurch gekennzeichnet, daß** man einen Latex des teilkristallinen Fluorpolymers mit dem Nukleierungsmittel vermischt, dann die erhaltene Mischung koaguliert und trocknet, wobei man ein Pulver gewinnt, und dann dieses Pulver mit dem Acryl(co)polymer und gegebenenfalls anderen Additiven wie Füllstoffen, Farbmitteln oder Verarbeitungshilfsmitteln vermischt und in dem latenten Lösungsmittel dispergiert.

**17.** Verfahren zur Herstellung einer Formulierung gemäß Anspruch 15, **dadurch gekennzeichnet, daß** man einen Latex des teilkristallinen Fluorpolymers mit dem Nukleierungsmittel vermischt, dann die erhaltene Mischung koaguliert und trocknet, wobei man ein Pulver gewinnt, dann dieses Pulver mit dem Acryl-(co)polymer und gegebenenfalls anderen Additiven wie Füllstoffen, Farbmitteln oder Verarbeitungshilfsmitteln vermischt und das Ganze in Wasser dispergiert.

**18.** Verfahren zur Herstellung der Formulierung auf Basis einer Zusammensetzung gemäß einem der Ansprüche 1 bis 12 in Pulverform, **dadurch gekennzeichnet, daß** man einen Latex des teilkristallinen Fluorpolymers mit dem Nukleierungsmittel vermischt, dann die erhaltene Mischung koaguliert und trocknet, wobei man ein Pulver gewinnt, dann dieses Pulver durch Extrudieren bei einer Temperatur von 150°C bis 280°C mit dem Acrylpolymer und gegebenenfalls anderen Additiven wie Füllstoffen, Farbmitteln oder Verarbeitungshilfsmitteln vermischt und das Extrudat abkühlt und dann zu einem feinen Pulver mahlt.

**19.** Verfahren zur Herstellung eines Überzugs aus einer Formulierung gemäß einem der Ansprüche 14 bis 15, **dadurch gekennzeichnet, daß** man das mit der Formulierung beschichtete Substrat bei einer so hohen Temperatur T brennt, daß man eine flüssige Phase, die das teilkristalline Fluorpolymer enthält und in der das Nukleierungsmittel zumindest teilweise in Form von festen kristallinen Keimen verbleibt, erhält, wobei die Temperatur T unter der Schmelztemperatur des Nukleierungsmittels liegt, und abkühlt, wobei das teilkristalline Fluorpolymer zumindest teilweise unter Bildung von Spärolithen mit einer Größe von weniger als 5 µm kristallisiert.

**20.** Verfahren zur Herstellung eines Überzugs aus einer Zusammensetzung gemäß einem der Ansprüche 1 bis 12, **dadurch gekennzeichnet, daß** man einen Latex des teilkristallinen Fluorpolymers mit dem Nukleierungsmittel vermischt, dann die erhaltene Mischung koaguliert und trocknet, wobei man ein Pulver gewinnt, und dann dieses Pulver durch Extrudieren bei einer Temperatur von 150°C bis 280°C unter direkter Beschichtung des zu schützenden Substrats mit dem Acrylpolymer und gegebenenfalls anderen Additiven wie Füllstoffen, Farbmitteln oder Verarbeitungshilfsmitteln vermischt.

**21.** Überzug, der durch Brennen und Abkühlen eines mit der Formulierung gemäß einem der Ansprüche 14 bis 15 oder auch nach dem Verfahren gemäß Anspruch 20 beschichteten Substrats erhältlich ist, **dadurch gekennzeichnet, daß** er in Form eines kontinuierlichen, auf dem Substrat haftenden und dieses bedeckenden Films vorliegt, der Film Fluorpolymersphärolithe mit einer Größe von weniger als 5 µm enthält, und dieser Film die gleiche Zusammensetzung aufweist wie die Zusammensetzung gemäß einem der Ansprüche 1 bis 12.

**Claims**

1. Polymeric composition comprising a blend of polymers comprising:

    (a) a semi-crystalline fluorinated polymer,
    (b) an acrylic polymer,

    **characterized in that** it additionally comprises :

    (c) from 0.01 to 20% by weight, with respect to the total weight of the semi-crystalline fluorinated polymer and of the acrylic polymer, of a nucleating agent in the form of particles having a melting point greater than that of the semi-crystalline fluorinated polymer,

    in which the nucleating agent is a tetrafluoroethylene homopolymer or a copolymer of tetrafluoroethylene with a fluorinated ethylenic compound and in which the particles have a size of 0.05 µm to 0.5 µm.

2. Composition according to Claim 1, **characterized in that** the semi-crystalline fluorinated polymer is a vinylidene difluoride homopolymer or a copolymer of vinylidene difluoride with a fluorinated ethylenic monomer or a non-fluorinated ethylenic compound or a non-fluorinated diene, monomers which are copolymerizable with vinylidene fluoride.

3. Composition according to Claim 2, **characterized in that** the fluorinated ethylenic monomer is chosen from vinyl fluoride, hexafluoropropylene, trifluoro-ethylene, chlorotrifluoroethylene, tetrafluoroethylene or hexafluoroisobutylene, the non-fluorinated ethylenic monomer is chosen from the group consisting of cyclohexyl vinyl ether and hydroxyethyl vinyl ether, and the non-fluorinated diene is chosen from the group consisting of butadiene, isoprene and chloroprene.

4. Composition according to Claim 2, **characterized in that** the semi-crystalline fluorinated polymer is a copolymer of vinylidene difluoride with from 0.1 to 20 mol% of vinyl fluoride or hexafluoropropylene or trifluoroethylene or chlorotrifluoroethylene or tetrafluoroethylene.

5. Composition according to Claim 2, **characterized in that** the semi-crystalline fluorinated polymer is a vinylidene difluoride homopolymer.

6. Composition according to one of Claims 1 to 5, **characterized in that** the acrylic polymer (acrylic modifier) is chosen from copolymers of one or more methyl or ethyl esters of acrylic acid or of methacrylic acid, optionally with other polymerizable unsaturated monomers chosen from:

    • other alkyl esters of acrylic acid or of methacrylic acid, such as butyl acrylate or 2-ethylhexyl acrylate,
    • styrenes, such as styrene or $\alpha$-methylstyrene,
    • nitriles, such as acrylonitrile and methacrylonitrile,
    • vinyls, such as vinyl acetate or vinyl chloride, with the additional condition that the methyl and/or ethyl acrylate and/or the methyl and/or ethyl methacrylate represent, by weight, at least 70% of the total weight of the said acrylic polymer.

7. Composition according to Claim 6, **characterized in that** the acrylic polymer is obtained from one or more monomers chosen from methyl acrylate, methyl methacrylate, ethyl acrylate or ethyl methacrylate.

8. Composition according to one of Claims 1 to 7, **characterized in that** the nucleating agent is in the form of a latex.

9. Composition according to one of Claims 1 to 7, **characterized in that** the nucleating agent, preferably in the form of a latex, is chosen from a tetrafluoroethylene copolymer comprising from 0.1 to 20 mol% of vinylidene fluoride, vinyl fluoride, hexafluoropropylene, trifluoroethylene, chlorotri-fluoroethylene or hexafluoroisobutylene or alternatively from poly(ethylene-co-tetrafluoro-ethylene) (ETFE), poly(tetrafluoroethylene-co-perfluorovinyl ethers) (PFA) and irradiated PVDF.

10. Composition according to one of Claims 1 to 9, **characterized in that** the semi-crystalline fluorinated polymer is PVDF and the acrylic (co)polymer is PMMA and **in that** the PVDF/PMMA ratio by weight is from 95/5 to 30/70.

**11.** Composition according to Claim 10, **characterized in that** the PVDF/PMMA ratio by weight is from 70/30 to 35/65.

**12.** Composition according to Claim 10, **characterized in that** the PVDF/PMMA ratio by weight is from 60/40 to 40/60.

**13.** Process for the preparation of the composition according to one of Claims 1 to 12, **characterized in that** a latex of the semi-crystalline fluorinated polymer is blended with the nucleating agent, **in that** the blend obtained is then coagulated and dried in order to recover a powder, and **in that** this powder is then blended with the acrylic polymer and optionally other additives, such as fillers, colorants or processing aids, by extrusion at a temperature of 150°C to 280°C.

**14.** Formulation based on a composition according to one of Claims 1 to 12, **characterized in that** it comprises a latent solvent for the semi-crystalline fluorinated polymer of the said composition.

**15.** Formulation based on a composition according to one of Claims 1 to 12, **characterized in that** it comprises water as agent for dispersing the said composition.

**16.** Process for the preparation of the formulation according to Claim 14, **characterized in that** the semi-crystalline fluorinated polymer latex is blended with the nucleating agent, **in that** the blend obtained is then coagulated and dried in order to recover a powder, **in that** this powder is then blended with the acrylic (co)polymer and optionally other additives, such as fillers, colorants or processing aids, and **in that** dispersing is carried out in the latent solvent.

**17.** Process for the preparation of the formulation according to Claim 15, **characterized in that** a semi-crystalline fluorinated polymer latex is blended with the nucleating agent, **in that** the blend obtained is then coagulated and dried in order to recover a powder, **in that** this powder is then blended with the acrylic (co)polymer and optionally other additives, such as fillers, colorants or processing aids, and **in that** the combined mixture is dispersed in water.

**18.** Process for the preparation of the formulation based on a composition according to one of Claims 1 to 12 and which is provided in the form of a powder, **characterized in that** a latex of the semi-crystalline fluorinated polymer is blended with the nucleating agent, **in that** the blend obtained is then coagulated and dried in order to recover a powder, **in that** this powder is then blended with the acrylic polymer and optionally other additives, such as fillers, colorants or processing aids, by extrusion at a temperature of 150°C to 280°C, and **in that** the extrudate is cooled before being milled to give a fine powder.

**19.** Process for obtaining a coating from a formulation according to either of Claims 14 and 15, **characterized in that** it comprises a stage of baking the substrate covered with the formulation at a temperature T which is high enough to produce a liquid phase comprising the semi-crystalline fluorinated polymer and in which the nucleating agent remains at least partially in the form of solid crystalline seeds, this temperature T being below the melting temperature of the nucleating agent, and a cooling stage in which the semi-crystalline fluorinated polymer at least partially crystallizes with the formation of spherulites with a size of less than 5 µm.

**20.** Process for obtaining a coating from a composition according to one of Claims 1 to 12, **characterized in that** a latex of the semi-crystalline fluorinated polymer is blended with the nucleating agent, **in that** the blend obtained is then coagulated and dried in order to recover a powder, and **in that** this powder is then blended with the acrylic polymer and optionally other additives, such as fillers, colorants or processing aids, by extrusion at a temperature of 150°C to 280°C while directly covering the substrate to be protected.

**21.** Coating capable of being obtained by the baking and the cooling of a substrate covered with the formulation according to either of Claims 14 and 15 or alternatively by the process of Claim 25, **characterized in that** it is in the form of a continuous film which adheres to the substrate while covering it, this film comprising fluorinated polymer spherulites with a size of less than 5 µm, and **in that** the composition of this film is overall the same as the composition according to one of Claims 1 to 12.